# NEUE EUROPÄISCHE PATENTSCHRIFT

(11) **EP 1 125 684 B2**
(45) Veröffentlichungstag und Bekanntmachung des Hinweises auf die Entscheidung über den Einspruch: **17.06.2009**
(45) Hinweis auf die Patenterteilung: 03.11.2004
(21) Anmeldenummer: 00116129.8
(22) Anmeldetag: 31.07.2000
(51) Int. Cl.: B23Q 41/02, B23Q 7/04, B23Q 7/10, B23Q 7/14

(54) **Verkettetes Fertigungssystem**
Serial production system
Syst?me de fabrication ? encha?nement

(30) Priorität: 16.02.2000 DE 10007024
(43) Veröffentlichungstag der Anmeldung: 22.08.2001
(73) Patentinhaber: FELSOMAT GmbH & Co. KG, D-75203 Königsbach-Stein (DE)
(72) Erfinder: Jäger, Helmut F., 75203 Königsbach-Stein 2 (DE)
(74) Vertreter: Kohler Schmid Möbus

(56) Entgegenhaltungen:
- EP-A- 0 056 063
- DE-A- 3 443 076
- DE-A- 3 538 720
- DE-A- 4 409 532
- DE-A- 19 718 090
- DE-A- 19 753 845
- DE-C- 3 521 285
- US-A- 3 909 922
- US-A- 4 503 596
- US-A- 5 160 011

## Beschreibung

Die Erfindung betrifft ein verkettetes Fertigungssystem mit den Merkmalen des Oberbegriffs des Anspruchs 1.

Verkettete Fertigungssysteme werden in der Serienfertigung eingesetzt, um Werkstücke auf möglichst zuverlässige und kostengünstige Weise in einer Vielzahl von Bearbeitungseinrichtungen bearbeiten zu können. Typische Anwendungsfälle für verkettete Fertigungssysteme finden sich bspw. in der Automobilindustrie, z.B. für eine hocheffiziente Motoren- oder Getriebekomponentenfertigung.

Als klassisches Beispiel für ein verkettetes Fertigungssystem ist die Linienfertigung bekannt, bei der der Teilefluß zwischen einzelnen Bearbeitungsstationen über ein Band gesteuert wird, das gleichzeitig als Puffer dient. Von dem Band zweigen seitlich Portale zu einzelnen Bearbeitungsstationen ab.

Als weiteres Beispiel für ein verkettetes Fertigungssystem ist die Verkoppelung einer Mehrzahl von Bearbeitungsstationen über Portale bekannt, wobei zwischen einzelnen oder mehreren Bearbeitungsstationen Bandpufferspeicher zur Entkoppelung angeordnet sind. Bei derartigen Bandpufferspeichern handelt es sich um Transportbänder, mit denen einzelne Teile gefördert oder gespeichert werden. Solche Puffer nehmen in der Regel etwa 10 bis 20 Teile auf und können gewisse Schwankungen, die durch Verzögerungen an den zugeordneten Bearbeitungseinrichtungen auftreten, auffangen.

Nachteilig ist hierbei jedoch, daß die Bandpufferspeicher nur für eine geringe Teilezahl ausgelegt sind, so daß bei größeren Störungen an einer oder mehrerer Bearbeitungseinrichtungen des Fertigungssystems das ganze System binnen Kürze zum Stillstand kommt. Außerdem kann sich die Handhabung einzelner Teile als nachteilig auf deren Qualität auswirken, da hierdurch Beschädigungen auftreten können. Des weiteren muß beim Leerfahren eines der Puffer zunächst abgewartet werden, bis alle Teile nachgefördert sind. Dies ist problematisch, wenn ein sogenannter "One-piece-flow" im Vordergrund steht, d.h. wenn beabsichtigt ist, die Bearbeitungsvorgänge so zu steuern, daß ein Teil möglichst ohne Zwischenspeicherung die verschiedenen Bearbeitungsstationen nacheinander durchläuft. Mit einem solchen One-piece-flow lassen sich grundsätzlich kurze Durchlaufzeiten erreichen, jedoch verringert sich die Produktivität des Fertigungssystems, da kleinste Maschinenstillstände zu sogenannten Verkettungsverlusten führen.

Auch mit dem zuvor erwähnten Transportband, durch das die einzelnen Bearbeitungsstationen, die über Portale angekoppelt sein können, verbunden werden, läßt sich ein One-piece-flow praktisch nicht realisieren.

Die Verwendung eines Bandes als Transporteinrichtung und gleichzeitig zur Pufferung zwischen den einzelnen Bearbeitungsstationen (z.B. US-A-5,160,011) ermöglicht zwar eine gewisse Pufferung bei unterschiedlichen Outputs der einzeln angekoppelten Bearbeitungsstationen, jedoch ist das Gesamtsystem nicht für eine hohe Produktivität und eine kurze Durchlaufzeit auslegbar. Zwangsläufig wirken sich unterschiedliche Taktzeiten der einzelnen Bearbeitungsstationen nachteilig auf den Output des Gesamtsystems aus.

Ferner ist der einzelnen Teilen zugeordnete Informationsfluß äußerst schwierig zu steuern. Dies ist besonders dann problematisch, wenn die Qualität einzelner Teile vollständig dokumentiert werden soll.

Bei der Umstellung der beiden vorgenannten Fertigungssysteme auf die Bearbeitung anderer Teile muß zunächst die ganze Anlage leergefahren werden, bevor mit der Fertigung der anderen Teile begonnen werden kann.

Darüber hinaus ist es grundsätzlich bekannt, sogenannte Automationszellen, in denen eine Mehrzahl von Teileträgern auf Stapeln aufgenommen werden, die als Puffer dienen, jeweils mit ein oder zwei Bearbeitungseinrichtungen zu verkoppeln, um diese unabhängig von Bearbeitungsschwankungen mit Rohteilen zu versorgen und Fertigteile hieraus aufzunehmen (vgl. z.B. EP 0 673 711 A1 oder EP 0 865 869 A1).

Die Verkoppelung sämtlicher Bearbeitungseinrichtungen des gesamten Fertigungssystems, das bspw. 20 oder 30 Bearbeitungsstationen umfassen kann, erfolgt hierbei über außenliegende Zwischenspeicher, die zwischen Automationszellen von nachfolgenden Bearbeitungseinrichtungen angeordnet sind. Zwischen diesen Zwischenspeichern und den Automationszellen werden dann Werkstückträgerstapel mittels Rollwagen oder Hubwagen transportiert.

Als nachteilig hat sich hierbei der hohe Speicher- und Teilebedarf gezeigt, der sich für das Gesamtsystem ergibt. Außerdem ist hierbei zu vorgegebenen Taktintervallen ein menschlicher Eingriff notwendig, um die Teileträgerstapel rechtzeitig zwischen den Zwischenspeichern und den Automationszellen zu transportieren. Diese grundsätzliche Abhängigkeit von manuellen Operationen wird teilweise als nachteilig in automatisierten Fertigungssystemen angesehen.

Darüber hinaus ist es grundsätzlich bekannt, verschiedene Bearbeitungsstationen eines verketteten Fertigungssystems und dazwischen angeordnete Puffer über fahrerlose Transportsysteme automatisch zu verknüpfen.

Als nachteilig hat sich hierbei der hohe Investitationsbedarf und die aufwendige Steuerung und Software für das Gesamtsystem erwiesen, wobei gleichzeitig eine erhöhte Unfallgefahr auftreten kann. Außerdem ist die Zuverlässigkeit bislang meist nur unzureichend gewährleistet.

Der Erfindung liegt somit die Aufgabe zugrunde, ein verbessertes verkettetes Fertigungssystem zu schaffen, das eine möglichst flexible Steuerung des Teiledurchlaufes auch durch ein großes System mit vielen Bearbeitungseinrichtungen ermöglicht und sowohl für einen One-piece-flow geeignet ist, als auch einen Durchlauf unter Verwendung von Puffern bei erhöhter Produktivität erlaubt. Dabei soll das Gesamtsystem möglichst kostengünstig und flexibel aufgebaut sein, eine hohe Zuverlässigkeit aufweisen und eine möglichst geringe Gesamtfläche belegen.

Diese Aufgabe wird bei einem verketteten Fertigungssystem gemäß Anspruch 1 gelöst

Erfindungsgemäß wird nämlich nunmehr der Transport von Teilen durch das verkettete Fertigungssystem mit Hilfe von einem oder mehreren Portalen über Portalgreifer, die daran verfahrbar sind, gewährleistet. Das Fertigungssystem, das mindestens drei Puffer, vorzugsweise jedoch eine Vielzahl von Puffern in Verbindung mit einer entsprechenden Anzahl von Bearbeitungseinrichtungen aufweist, wird durch die Puffer, die zur Aufnahme von Teileträgern ausgebildet sind, flexibel verkettet, wobei die Nachteile von Bandspeichern vermieden werden. Durch die Umsetzeinrichtung zum Umsetzen von Teileträgern zwischen Stapelplätzen innerhalb der Puffer kann die Kapazität der Puffer an die jeweiligen Vorgaben und auch an den jeweiligen Zustand des Gesamtsystems angepaßt werden.

Ein menschlicher Eingriff in das System zum Transport von Werkstückträgerstapeln ist nicht notwendig. Vielmehr ist Bedienungspersonal nur für Kontroll- und Steuerungszwecke und für Notfälle erforderlich.

Außerdem ist es möglich, sofern dies gewünscht ist, zusätzlich Teileträger von außen in die Puffer einzuschleusen oder aus diesen auszuschleusen.

Auf diese Weise wird eine äußerst flexible Fahrweise für das gesamte Fertigungssystem ermöglicht.

So ist es zum einen möglich, einen One-piece-flow zu erreichen, indem die Pufferkapazität nicht genutzt wird oder minimiert wird. So lassen sich minimale Durchlaufzeiten und minimale Bestände erreichen.

Des weiteren können gemäß einer anderen Strategie gewisse Mindestgrößen für die Puffer vorgegeben werden, um eine möglichst hohe Produktivität zu erreichen. Dabei ist es gleichzeitig möglich, an unterschiedlichen Stellen des Gesamtsystems gezielt konfigurierte Puffer zu verwenden, um unterschiedliche Maschinentakte, kleinere Maschinenstillstände und selbst Veränderungen im Produktionssystem zu beherrschen. Es besteht sogar die Möglichkeit, mit Hilfe einer Simulation das Verhalten des Fertigungssystems zu simulieren und optimale Puffergrößen für eine möglichst hohe Produktivität zu ermitteln, die dann in den einzelnen Puffern als Vorgabewerte verwendet werden. So können unterschiedliche Taktzeiten und Ausfallwahrscheinlichkeiten der einzelnen Komponenten des Fertigungssystems berücksichtigt werden, um den Gesamtdurchlauf zu optimieren.

Darüber hinaus ist es ohne großen Personalaufwand möglich, über außenliegende Transportmöglichkeiten in Notfällen zusätzlich Teileträger in die Puffer einzuschleusen oder aus diesen auszuschleusen.

Darüber hinaus können die Puffer automatisch nach dem FIFO-Prinzip (first-in/first-out) umgeschlagen werden, was generell oder in vorgegebenen Zeitabständen flexibel erfolgen kann.

Ein besonderer Vorteil des Systems liegt darüber hinaus in einer dezentralisierten Datenverwaltung, wodurch sich die zu einzelnen Teilen, Teileträgern oder Teileträgerstapeln gehörenden Informationen im Gesamtsystem sauber verarbeiten und verfolgen lassen. Die Werkstücke fließen durch das Gesamtsystem praktisch gemeinsam mit der dazugehörigen Information; es ergibt sich insgesamt ein äußerst übersichtlicher Material- und Informationsfluß.

So ergibt sich eine Transparenz des gesamten Produktionsablaufs mit einer Übersicht über die jeweilige Maschinenauslastung und Pufferbelegung.

Gemäß einer ersten Ausführung des erfindungsgemäßen Fertigungssystems ist zumindest eine Umsetzeinrichtung durch einen Portalgreifer gebildet, der zum Greifen von Teilen als auch zur Umsetzung von Teileträgern ausgebildet sind, wobei die Stapelplätze der Puffer in Verfahrrichtung der Portalgreifer entlang des Portals hintereinander angeordnet sind.

Es handelt sich hierbei um eine besonders kostengünstig realisierbare Lösung, da die Puffer äußerst einfach aufgebaut sind und keine eigene Umsetzeinrichtung benötigen. Vielmehr erfolgt die Umsetzung mit Hilfe von Portalgreifern, die sowohl zum Umsetzen von Teileträgern als auch zur Handhabung von Teilen genutzt werden, um diese in die Bearbeitungseinrichtungen ein- bzw. auszuschleusen und in die Teileträger in den Puffern einzulegen bzw. aus diesen zu entnehmen. Dieser besonders kostengünstige Aufbau wird mit einer eingeschränkten Flexibilität erkauft, da ein manuelles Ein- und Ausschleusen von zusätzlichen Teileträgern in die Puffer nicht mehr unabhängig von der Funktionsweise des übrigen Systems möglich ist. Gleichfalls können sich verschiedene Portalgreifer gegenseitig behindern. Auch können Leerzeiten auftreten, da die Portalgreifer während der Bedienung einer Bearbeitungseinrichtung keine Umstapelvorgänge innerhalb der Puffer vornehmen können.

Gleichwohl mag diese vereinfachte Ausführung für manche Systeme infolge ihrer Kostenvorteile ausreichend sein.

Gemäß einer anderen Ausführung der Erfindung ist zumindest einer der Puffer als Automationszelle ausgeführt, die eine eigene Umsetzeinrichtung zum Umsetzen von Teileträgern innerhalb der Automationszelle aufweist.

Auf diese Weise werden die zuvor beschriebenen Nachteile vermieden, da Umstapelvorgänge innerhalb des Puffers von der Beschickung der Bearbeitungseinrichtungen mit Teilen unabhängig werden.

Die Automationszellen sind hierbei vorzugsweise derart angeordnet, daß sich die Stapelplätze in den Automationszellen quer zur Erstreckungsrichtung des mindestens einen Portals befinden.

Auf diese Weise können schmale Automationszellen zwischen benachbarten Bearbeitungseinrichtungen angeordnet werden, um so den Platzbedarf des Gesamtsystems zu verringern.

In zusätzlicher Weiterbildung der Erfindung ist zumindest einer der Puffer als Automationszelle ausgebildet, die eine Umsetzeinrichtung zum Umsetzen von Teileträgern zwischen verschiedenen Stapelplätzen innerhalb eines Arbeitsraums der Automationszelle und Einrichtungen zum Einschleusen und Ausschleusen von Teileträgerstapeln in den Arbeitsraum und aus dem Arbeitsraum aufweist.

Auf diese Weise werden Umstapelvorgänge und Handhabungsvorgänge innerhalb des Arbeitsraums der Automationszelle entkoppelt von einem Ein- bzw. Ausschleusen von Werkstückträgern in einen Laderaum. So kann bei der notwendigen Wahrung einer Unfallsicherheit durch Verriegelung des Laderaums bei geöffneter Außentür dennoch während der Ent- bzw. Beladung gleichzeitig innerhalb des Arbeitsraums der Fertigungszelle der automatische Ablauf fortgesetzt werden.

Hierzu weisen die Automationszellen vorzugsweise jeweils mindestens drei Stapelplätze auf.

In weiterer Ausgestaltung der Erfindung ist zumindest einer der Puffer über mindestens zwei Portale mit Bearbeitungseinrichtungen verkoppelt.

Auf diese Weise können Teile von einer vorgeordneten Bearbeitungseinrichtung in die jeweilige Automationszelle überführt werden und Teile aus der Automationszelle in eine nachgeordnete Bearbeitungseinrichtung überführt werden, ohne daß sich Greifeinrichtungen oder dergleichen innerhalb der Automationzelle gegenseitig behindern.

Grundsätzlich wäre es jedoch auch möglich, nur ein einziges Portal zur Verbindung sämtlicher Bearbeitungseinrichtungen und Automationszellen bzw. Puffer zu verwenden.

In vorteilhafter Weiterbildung der Erfindung sind die Puffer zumindest teilweise als Automationszellen ausgeführt, bei der innerhalb des nach außen abgeschlossenen Arbeitsraums ein erster, ein zweiter und ein dritter hintereinander in einer Horizontalrichtung angeordneter Stapelplatz vorgesehen ist, von denen der erste über eine Tür von außen in der Horizontalrichtung beschickbar ist und gegenüber den übrigen Stapelplätzen berührungssicher abtrennbar ist, wobei eine Umsetzeinrichtung, die sich in Richtung der hintereinander angeordneten Stapelplätze erstreckt und ein Umsetzen von Teilen zwischen den drei Stapelplätzen innerhalb des Arbeitsraums erlaubt, und wobei die Umsetzeinrichtung eine erste in Horizontalrichtung verfahrbare Linearachse und eine zweite in Vertikalrichtung verfahrbare Linearachse aufweist.

Mit einer derartigen Automationszelle läßt sich eine ausreichend große Pufferkapazität bei kurzen Taktzeiten einer damit gekoppelten Bearbeitungseinrichtung bei kleinem Platzbedarf auf relativ kostengünstige Weise verwirklichen. Es wird ein Umsetzen der Teileträger zwischen den einzelnen Stapelplätzen sowie die Bereitstellung der Teileträger für den zugeordneten Portalgreifer, der an einem darüber verlaufenden Portal verfahrbar ist, mit nur einzigen Umsetzeinrichtung erreicht, wobei eine zusätzliche Beladeeinheit, wie ein Stapelwechselmodul, nicht erforderlich ist.

Durch eine spezielle Strategie der Umsetzung von Teileträgern zwischen den einzelnen Stapelplätzen läßt sich ein schneller Bearbeitungsablauf und eine gute Anpassung an zugeordnete Bearbeitungseinrichtungen mit sehr kurzen Taktzeiten verwirklichen.

In zusätzlicher Weiterbildung dieser Ausführung ist der erste Stapelplatz gegenüber dem zweiten, dazu benachbarten Stapelplatz durch eine sich im wesentlichen vertikal erstreckende Schottwand und gegenüber dem übrigen Teil des Arbeitsraums durch eine Haube berührungssicher abgetrennt, die zumindest zwischen dem ersten und dem zweiten Stapelplatz verfahrbar ist.

Dabei kann die Schottwand feststehend ausgebildet sein und mit Zentrierflächen zur Führung und Zentrierung von zum ersten Stapelplatz zugeführter Teileträger versehen sein.

Zusätzlich können der Schottwand Führungselemente zugeordnet sein, die zur Zentrierung von zugeführten Teileträgern seitlich auf die Teileträger zustellbar angeordnet sind.

Die Haube ist vorzugsweise U-förmig mit einer Deckfläche und mit zwei Seitenflächen ausgebildet.

Darüber hinaus ist die Haube vorzugsweise zwischen dem ersten, dem zweiten und dem dritten Stapelplatz verfahrbar angeordnet.

Durch diese Maßnahmen läßt sich einerseits erreichen, daß die Handhabungsvorgänge innerhalb des Arbeitsraums entkoppelt werden vom Ein- bzw. Ausschleusen von Teileträgern auf den ersten Stapelplatz. Ferner kann die Automationszelle für kürzere Taktzeiten ausgelegt werden.

Dabei kann die Haube mittels der Umsetzeinrichtung verfahrbar sein. Jedoch kann zur Erzielung noch kürzerer Taktzeiten auch ein eigener Antrieb zum Verfahren der Haube vorgesehen sein. Sofern eine zugeordnete Bearbeitungseinrichtung eine besonders kurze Taktzeit aufweist, kann zusätzlich die Haube zur Aufnahme mindestens eines Teileträgers ausgebildet sein.

Hierdurch kann der Portalgreifer am dritten Stapelplatz auf den auf die Haube aufgelegten Teileträger zugreifen, während gleichzeitig ein Umstapelvorgang zwischen Teileträgern auf dem ersten und dem zweiten Stapelplatz ermöglicht wird.

In zusätzlicher Weiterbildung der Erfindung ist zur Verriegelung der Haube eine um ihre Längsachse schwenkbare Welle vorgesehen, die mit Verrieglungszapfen versehen ist, die mit einer Zapfenaufnahme an der Haube in vorgegebenen Positionen verriegelbar sind.

Des weiteren können zur Übernahme von Werkstückträgern von einem Bodenroller in eine definierte Endlage im Bereich des ersten Stapelplatzes Führungsschienen vorgesehen sein, die vorzugsweise mit Rollen und mit Stellelementen versehen sind.

Durch diese Maßnahmen läßt sich einerseits eine saubere Verriegelung der Haube in einer der gewünschten Positionen erreichen und andererseits eine Übernahme eines Werkstückträgerstapels in eine vorgegebene Position auf dem ersten Stapelplatz und eine genaue Ausrichtung in Kombination mit der zur Zentrierung ausgebildeten Schottwand.

Auf diese Weise werden durch die präzise Ausrichtung Fehler bei den späteren Handhabungsvorgängen vermieden und eine höhere Präzision gewährleistet.

Schließlich kann auf der Oberseite der Haube eine Schublade zur Aufnahme eines Teileträgers vorgesehen sein, die ein Verfahren des Teileträgers bei geöffneter Bedienungstür nach außen erlaubt.

Dies ermöglicht das Ein- und Ausschleusen von Prüfteilen und darüber hinaus einen Betrieb der Zelle bzw. des Gesamtsystems nur mittels von einzelnen auf der Haube abgesetzten Teileträgern unabhängig von der Belegung der Puffer bzw. Automatisationszellen, um z.B. kurzzeitig eine Kleinserie in den Arbeitsablauf einsteuern zu können.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein erstes Ausführungsbeispiel eines erfindungsgemäβen verketteten Fertigungssystems;
- Fig. 2: eine herkömmliche Automationszelle, die als Puffer bei dem Fertigungssystem gemäß Fig. 1 verwendet kann, in schematischer Darstellung;
- Fig. 3: eine Automationszelle, die vorzugsweise bei dem Fertigungssystem gemäß Fig. 1 eingesetzt wird, in schematischer Darstellung;
- Fig. 4: eine teilweise freigeschnittene, perspektivische Ansicht einer Automationszelle gemäß Fig. 3, bei der zum Zwecke der besseren Erkennbarkeit auf die Darstellung einer Reihe von Teilen, wie etwa der Fronttür, verzichtet wurde;
- Fig. 5: eine schematische Seitenansicht der Automationszelle gemäß Fig. 4;
- Fig. 6: eine vereinfachte Darstellung der Schottwand der Automationszelle gemäß Fig. 3 in der Seitenansicht zusammen mit einem seitlichen Führungselement für einen zugeordneten Bodenroller;
- Fig. 7: eine Aufsicht der Schottwand gemäß Fig. 6 mit zugeordneten seitlichen Führungsteilen;
- Fig. 8: eine Ansicht auf die Schottwand gemäß Fig. 6 mit zugeordnetem Bodenroller und zugeordneter Haube von vorn, in vereinfachter Darstellung;
- Fig. 9: eine Teilansicht auf die Haube von der Seite in vereinfachter Darstellung und
- Fig. 10: eine abgewandelte Ausführung des verketteten Fertigungssystems in vereinfachter Darstellung.

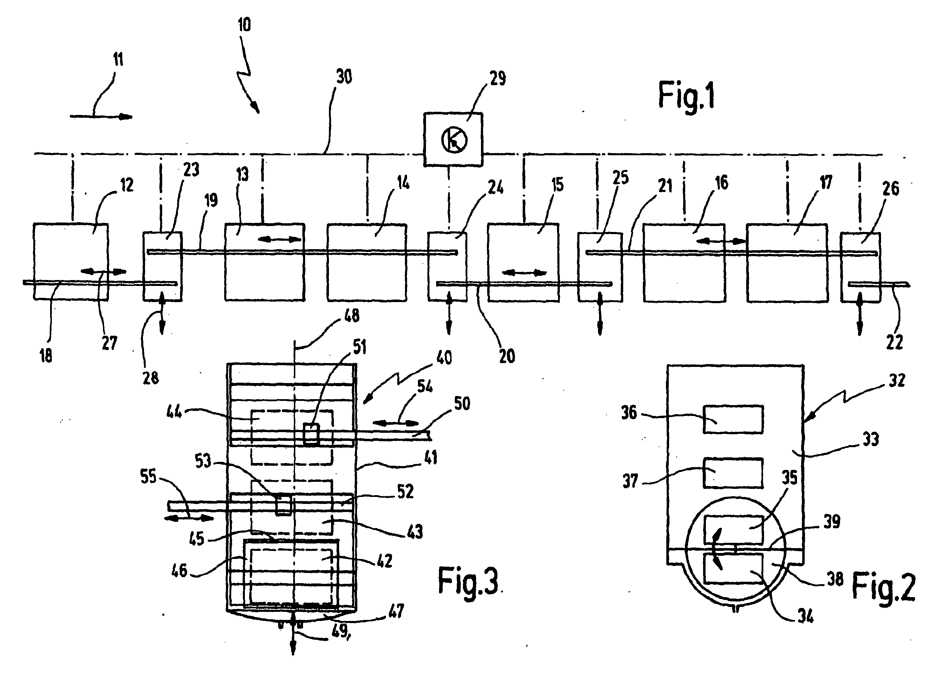

In Fig. 1 ist ein erfindungsgemäßes verkettetes Fertigungssystem schematisch dargestellt und insgesamt mit der Ziffer 10 bezeichnet.

Das Fertigungssystem 10 weist insgesamt sechs Bearbeitungseinrichtungen 12, 13, 14, 15, 16, 17 auf, sowie vier zugeordnete Puffer 23, 24, 25, 26 und fünf zugeordnete Portale 18, 19, 20, 21, 22.

Bei dem dargestellten System 10 handelt es sich lediglich um einen Ausschnitt eines größeren Fertigungssystems 10, das eine größere Anzahl von Bearbeitungseinrichtungen und zugeordneter Puffer aufweisen kann. Es könnte sich bspw. um 15 bis 30 Bearbeitungseinrichtungen mit einer entsprechend angepaßten Anzahl von Puffern handeln.

Gemäß Fig. 1 steht ein erster Puffer 23 über ein Portal 18 mit einer ersten Bearbeitungseinrichtung 12 in Verbindung und über ein Portal 13 mit zwei nachgeordneten Bearbeitungseinrichtungen 13, 14 und mit einem weiteren Puffer 24. Der Puffer 24 ist zusätzlich über das Portal 20 mit der Bearbeitungseinrichtung 15 und mit einem weiteren Puffer 25 gekoppelt. Der Puffer 25 ist über das Portal 21 mit zwei nachgeordneten Bearbeitungseinrichtungen 16, 17 und dem Puffer 26 verbunden. Der Puffer 26 ist wiederum über ein weiteres Portal 22 mit nachgeordneten Stationen des Fertigungssystems 10 verbunden.

Das Fertigungssystem 10 wird von Teilen in Fließrichtung 11 durchlaufen, wobei diese Teile nacheinander Bearbeitungsvorgängen an den einzelnen Bearbeitungseinrichtungen 12 bis 17 unterzogen werden. Dabei können einzelne Bearbeitungseinrichtungen, z.B. die Bearbeitungseinrichtungen 13 und 14 sowie 16 und 17 die gleiche Bearbeitungsaufgabe ausführen, um so eine parallele Bearbeitung von Werkstücken zu erlauben, um so einen erhöhten Durchsatz an einer zeitkritischen Station oder eine verbesserte Ausfallsicherheit bei Ausfall einer Station zu gewährleisten.

Bei dem anhand von Fig. 1 dargestellten Fertigungssystem erfolgt der Teilefluß durch das Fertigungssystem 10 mit Hilfe von jeweils zwei Portalen 18, 19, bzw. 19, 20, bzw. 20, 21, bzw. 21, 22, die jeweils einem Puffer 23 bzw. 24, 25, 26 zugeordnet sind.

Grundsätzlich wäre es jedoch auch möglich, nur ein einziges Portal zur Verbindung sämtlicher Bearbeitungseinrichtungen und Puffer zu verwenden.

An jedem Portal 18 bis 22 ist mindestens ein Portalgreifer an einem Schlitten in Längsrichtung des Portals verfahrbar, wie durch den Pfeil 27 angedeutet ist, und in Vertikalrichtung gesteuert verfahrbar, um Teile aus den Puffern 23 bis 26 aufnehmen zu können, in diese absetzen zu können und in die Bearbeitungseinrichtungen 12 bis 17 zu überführen bzw. aus diesen aufzunehmen.

Zusätzlich können in die Puffer 23, 24, 25, 26 von einer Seite aus Teileträgerstapel ein- und ausgeschleust werden, wie durch den Pfeil 28 angedeutet ist.

Sämtliche Komponenten des verketteten Fertigungssystems 10 sind dezentral gesteuert und somit autonom. Jedoch sind die Komponenten für die Kommunikation mit einem zentralen Produktionsleit- und Informationssystem 29 (Kopfsteuerung) gekoppelt, was etwa über ein Bussytem 30 erfolgen kann.

Die Puffer 23 bis 26 können bspw. als Automationszellen ausgebildet sein, wie dies aus der EP 0 673 711 A1 oder der EP O 865 864 A1 bekannt ist und schematisch anhand von Fig. 2 dargestellt ist. Die Automationszelle 32 gemäß Fig. 2 weist einen abgeschlossenen Arbeitsraum 33 auf, innerhalb dessen ein Stapelplatz 35 und ein weiterer Stapelplatz 36 angeordnet sind, zwischen denen ein Bereitstellungsplatz 37 vorgesehen ist. Zur Einschleusung und Ausschleusung von Teileträgerstapeln in den Arbeitsraum 33 ist zusätzlich ein Stapelaustauschmodul 38 vorgesehen, der einen durch Türen nach außen berührungssicher abtrennbaren Laderaum aufweist. Durch eine Schottwand 39, die gemeinsam mit einem Drehgestell verschwenkbar ist, auf dem der Stapelplatz 35 und ein gegenüberliegender, von außen durch die Türen zugänglicher Stapelplatz 34 angeordnet sind, wird ermöglicht, daß der äußere Stapel auf den Stapelplatz 34 bei geöffneter Außentür ein- bzw. ausgeschleust werden kann, während Teileträger auf dem gegenüberliegenden Stapelplatz 35 innerhalb des Arbeitsraums 33 gehandhabt werden. Als Umsetzeinrichtung innerhalb des Arbeitsraums 33 ist ein Einarm-Palettenumsetzer (nicht dargestellt) vorgesehen, mit dem Teileträger zwischen den Stapelplätzen 35 und 36 hin- und hergestapelt werden können und in eine obere Position auf den Bereitstellungsplatz 37 gebracht werden können, in der durch das zugeordnete Portal über den Portalgreifer (nicht dargestellt) Teile aus einem Teileträger entnommen werden können oder in diesen eingelegt werden können. Der Palettenumsetzer kann alternativ auch eine Horizontalachse aufweisen, die an einer Vertikalführung in Vertikalrichtung verfahrbar aufgenommen ist.

Die Automationszelle 40 gemäß Fig. 3 weist drei Stapelplätze 42, 43, 44 auf, die in einer ersten Horizontalrichtung 48 hintereinander angeordnet sind. Der erste Stapelplatz 42 ist nach außen durch eine Tür 47, die zwei Schwenkflügel aufweist, abgeschlossen und gegenüber dem zweiten Stapelplatz 43 durch eine feststehende Schottwand 45 abgetrennt. Bei geöffneter Tür 47 wird ein berührungssicherer Abschluß gegenüber dem übrigen Teil der Automationszelle 40 durch eine Haube 46 gewährleistet, so daß innerhalb des Arbeitsraums 41 Teileträger zwischen den beiden Stapelplätzen 43 und 44 hin- und herbewegt werden können, ohne daß bei geöffneter Tür 47 eine Unfallgefahr besteht.

Oberhalb der Automationszelle 40 verlaufen zwei Portale 50, 52, die an den beiden oberen Enden der Automationszelle 40 abgestützt sind und auf denen Portalgreifer 51 bzw. 53 in Richtung der Portale 50, 52 verfahrbar sind, wie durch die Pfeile 54 und 55 angedeutet ist, und die eine jeweils in Vertikalrichtung verfahrbare Greifeinrichtung zum Ergreifen von Teilen aufweisen.

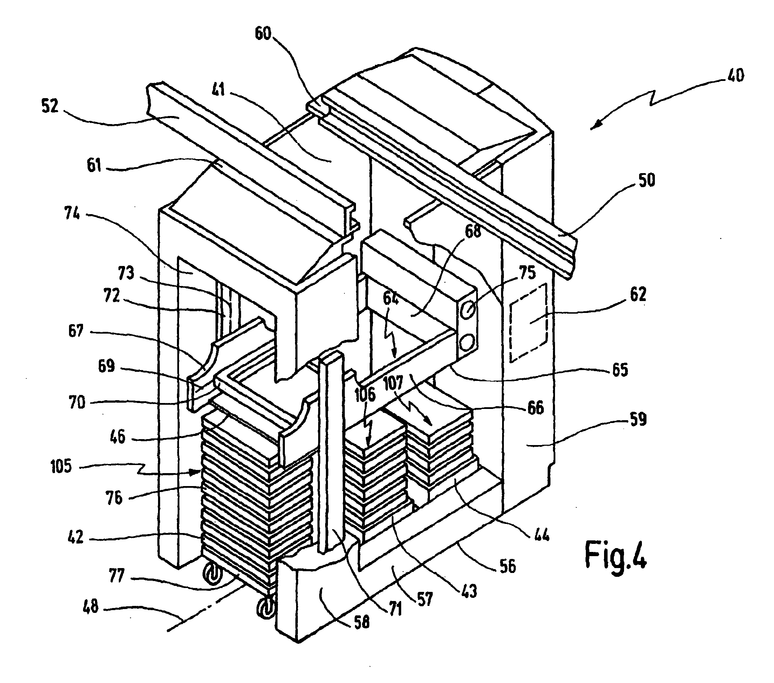

Zur Umsetzung von Teileträgern zwischen den Stapelplätzen 42, 43, 44 innerhalb des Arbeitsraums 41 und zur Bereitstellung der Teileträger für die Portalgreifer 51 bzw. 53 ist innerhalb des Arbeitsraums 41 eine Umsetzeinrichtung mit einer in Horizontalrichtung verfahrbaren Linearachse und einer in Vertikalrichtung verfahrbaren Linearachse vorgesehen, wie nachstehend noch anhand von Fig. 4 näher erläutert wird.

Die Ausgestaltung der Puffer 23 bis 26 des Fertigungssystems 10 in der Form der Automationszelle 40 führt zu einer Reihe von Vorteilen im Vergleich zu einer herkömmlichen Linienfertigung mit Bandtransport oder einer Verkoppelung einzelner Bearbeitungseinrichtungen über Portale mit dazwischen angeordneten Bandpufferspeichern.

Da jeder Puffer 23 bis 26 mindestens zwei Stapelplätze, vorzugsweise sogar drei Stapelplätze 42 bis 44 gemäß Fig. 3 aufweist, ist eine ausreichende Pufferkapazität bei dem gesamten Fertigungssystem 10 gewährleistet, wobei gleichzeitig die Nachteile vermieden werden, die mit der unmittelbaren Handhabung von Teilen verbunden sind (Beschädigungsgefahr, Personalaufwand, Unübersichtlichkeit in der Logistik).

Des weiteren kann das Fertigungssystem 10 flexibel betrieben werden, wie es nach den jeweiligen Vorgaben erwünscht ist oder bei bestimmten Auslastungssituationen gefordert wird.

Bei einer ersten Betriebsweise kann das Fertigungssystem 10 als One-piece-flow gefahren werden, um bei möglichst kurzer Durchlaufzeit und geringen Teilebeständen einen schnellen Durchlauf von Teilen durch das gesamte Fertigungssystem 10 zu erreichen. Hierbei kann auf die Pufferfunktion entweder verzichtet werden oder auf einen Teileträger begrenzt werden.

Ist dagegen eine möglichst hohe Produktivität erwünscht, so werden die Puffer 23 bis 26 vorzugsweise nach einer Computersimulation des gesamten Fertigungssystems auf ihre optimale Größe eingestellt, die zur Anpassung der verschiedenen Taktzeiten der beteiligten Bearbeitungseinrichtungen und der Störungsanfälligkeit der betreffenden Bearbeitungseinrichtungen optimal ist.

Hierbei kann eine gewisse Mindestpuffergröße vorgegeben werden, die möglichst nicht unterschritten werden soll oder auch eine maximale Puffergröße, die möglichst nicht überschritten werden soll (angepaßt an den zu erzielenden Nutzungsgrad).

Durch die Verwendung von drei Stapelplätzen innerhalb der Automationszelle 40 wird es ermöglicht, daß zusätzlich flexible Ausweichmöglichkeiten bestehen, ohne daß ein manuelles Teilehandling notwendig ist, was mit der Gefahr einer Werkstückbeschädigung verbunden wäre. Vielmehr können an den Teilen des Fertigungssystems, an denen Engpässe auftreten, im Rahmen einer Notstrategie über außenliegende Transportmöglichkeiten zusätzlich Teileträgerstapel in die betreffenden Puffer 23 bis 26 ein- oder ausgeschleust werden und ggf. sogar zusätzliche externe Bearbeitungseinrichtungen mit in den Teilefluß einbezogen werden.

Das Fertigungssystem 10 verbindet also die Vorteile einer Linienfertigung mit den Vorteilen von Automationszellen, die eine flexible Puffergröße und eine flexible Zufuhr von Werkstückträgerstapeln ermöglichen.

Dabei können verschiedene Strategien je nach den momentanen Anforderungen gefahren werden und auch die Gesamtanlage in wenig aufwendiger Weise zwischen verschiedenen Strategien umgestellt werden, z.B. von One-piece-flow auf Durchfluß mit optimierten Puffergrößen zur Erreichung einer maximalen Produktivität.

Die Information zu den betreffenden Teilen durch das gesamte Fertigungssystem kann praktisch gemeinsam mit den Teilen erfolgen, was die Steuerung des Fertigungssystems 10 erheblich vereinfacht und einen übersichtlichen Materialfluß gewährleistet.

Auch können Puffer ständig in FIFO-Betrieb oder in vorgegebenen Zeitabständen oder auf manuelle Anforderung aufgefrischt werden, um ein zu langes Verbleiben von Werkstücken in einem Puffer durch Auswechseln gegen neu zugeführte Teile zu vermeiden.

Aufbau und Funktionsweise der Automationszelle 40 wird im folgenden näher anhand der Fig. 4 bis 9 beschrieben.

Die Automationszelle 40 weist gemäß Fig. 4 einen stabilen U-förmigen Rahmen 56 mit einem mittleren Bodenelement 57 auf, einem vorderen Rahmenteil 58, an dem die beiden Türflügel ausgebildet sind, und mit einem hinteren Rahmenteil 59.

Der Rahmen 56 und die vorderen und hinteren Rahmenteile 58 und 59 sind derart verwindungssteif ausgeführt, daß die Automationszelle 40 als Ganzes mit den zugehörigen Einbauteilen, die am Rahmen 56 befestigt sind, transportiert und aufgestellt werden kann. Des weiteren sind an den oberen Enden des vorderen Rahmenteils 58 und des hinteren Rahmenteils 59 Stützflächen 60 bzw. 61 vorgesehen, auf denen die Portale 50, 52 befestigt werden können, was zu einer Vereinfachung der Gesamtanlage führt.

Im hinteren Rahmenteil 59 ist ferner eine Steuereinrichtung 62, über die der Funktionsablauf der Automationszelle 40 programmgesteuert werden kann, integriert. Innerhalb des Arbeitsraums o 41 ist eine insgesamt mit der Ziffer 64 bezeichnete Umsetzeinrichtung vorgesehen, die ein Umsetzen von Teileträgern 76 zwischen Werkstückträgerstapeln 105, 106, 107 ermöglicht, die auf den Stapelplätzen 42, 43, 44 aufgenommen sind. Ferner können in einer oberen Position aus einem Teileträger 76 mittels der an den Portalen 50, 52 verfahrbaren Portalgreifer 51, 53 (in Fig. 4 nicht dargestellt) entnommen werden bzw. eingelegt werden.

Die Umsetzeinrichtung 64 weist ein U-förmiges Gestell 65 auf, mit einem Mittelteil 68, das kurz vor dem hinteren Rahmenteil 59 der Automationszelle endet, und mit zwei horizontal verlaufenden Schenkeln 66, 67. In ihrem vorderen Bereich sind die beiden Schenkel 66, 67 an zwei Vertikalträgern 71, 72, die in das vordere Rahmenteil 58 integriert sind, an Vertikalführungen 73 in Vertikalrichtung verfahrbar aufgenommen, wozu ein geeigneter Antrieb 74 mit einem Ketten- oder Zahnriementrieb in das vordere Rahmenteil 58 integriert ist. An den beiden Schenkeln 66, 67 sind Horizontalführungen 69 vorgesehen, an denen eine Greifeinrichtung 70 gesteuert verfahrbar ist, wozu ein Motor 75 im Mittelteil 68 des Gestells 65 aufgenommen ist und mit einem geeigneten Ketten- oder Zahnriementrieb gekoppelt ist.

Auf den ersten Stapelplatz 42 können bei geöffneter Tür Teileträgerstapel 105 ein- bzw. ausgefahren werden, die auf Bodenrollern 77 oder Grundrahmen aufgenommen sind.

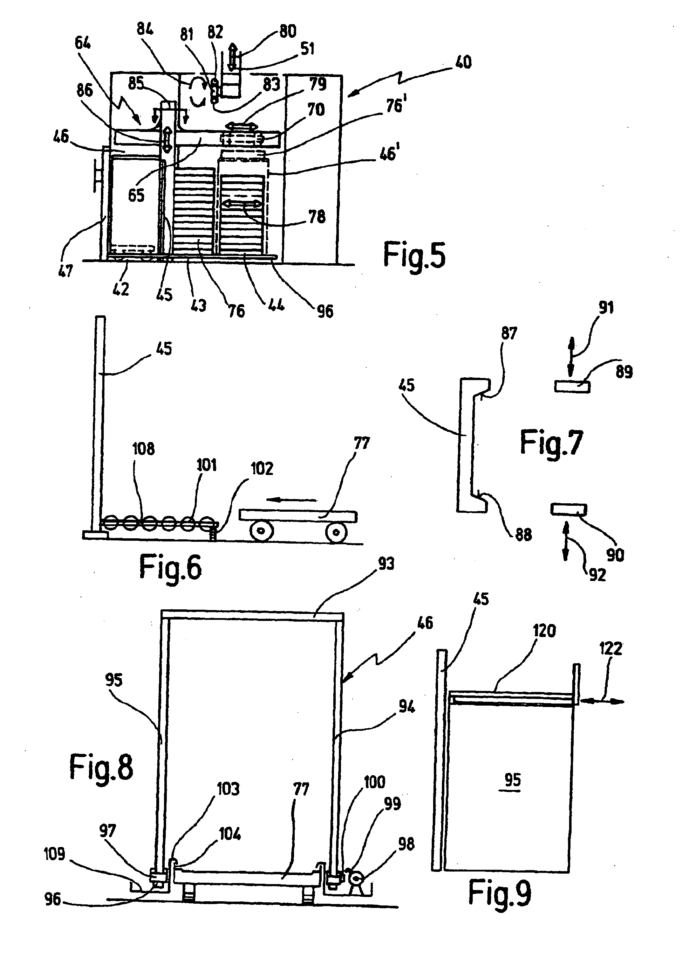

Wie anhand von Fig. 5 schematisch angedeutet ist, kann durch eine vorteilhafte Betriebsweise bei der Handhabung der Teileträger 76 trotz der einzigen Umsetzeinrichtung 64, mittels derer die Teileträger 76 zwischen den drei Stapelplätzen 42, 43, 44 in Horizontalrichtung 63 transportiert werden, ein schneller Arbeitsablauf gewährleistet werden, der an sehr kurze Taktzeiten von zugeordneten Bearbeitungseinrichtungen angepaßt werden kann, ohne daß es zu Verzögerungen kommt.

Dabei kann gleichzeitig eine stapelreine Logistik praktisch ohne Verzögerungen gewährleistet werden.

So kann beim erstmaligen Vollfahren ein Teileträgerstapel mit Rohteilen auf den ersten Stapelplatz 42 eingefahren werden. Bei geöffneter Bedienungstür 47 ist der erste Stapelplatz 42 einerseits durch die feststehende Schottwand 45 gegenüber dem zweiten Stapelplatz 43 abgetrennt und andererseits durch die U-förmige Haube 46, die sich bei geöffneter Bedienungstür über dem ersten Stapelplatz 42 befindet, so daß dieser berührungssicher gegenüber dem übrigen Teil der Automationszelle 40 abgetrennt ist.

Nach Schließen der Bedienungstür 47 wird die Haube 46 vom ersten Stapelplatz 42 weggefahren, so daß nunmehr Teileträger 76 mit Hilfe der Greifeinrichtung 70 vom ersten Stapelplatz 42 etwa auf den zweiten Stapelplatz 43 umgesetzt werden können, wie durch den Pfeil 85 angedeutet ist. Hierbei können gleichzeitig mehrere Teileträger 76 bewegt werden. Nach dem Umstapeln auf den zweiten Stapelplatz 43 können die einzelnen Teileträger 76 der Reihe nach auf den dritten Stapelplatz 44 umgesetzt werden, wobei mittels des in Vertikalrichtung 80 verfahrbaren Portalgreifers, der durch die Ziffer 51 angedeutet ist, über einen daran vorgesehenen Doppelgreifer 81 Teile 82 bzw. 83 aus dem Teileträger 76 entnommen werden bzw. in diesen eingelegt werden können.

Verzögerungen durch das Umstapeln können vermieden werden, indem nicht alle Teile eines Teileträgers nacheinander abgearbeitet und zu der zugeordneten Bearbeitungseinrichtung überführt werden, sondern zumindest ein Teil ausgespart wird, so daß etwa an jedem Teileträger 76 ein Rohteil verbleibt.

Beim späteren Zurückstapeln der Teileträger vom dritten Stapelplatz 44 zum ersten Stapelplatz 42 können dann die noch verbliebenen Rohteile abgearbeitet und gegen Fertigteile aus der Bearbeitungseinrichtung mittels des Doppelgreifers 81 ausgetauscht werden, der an dem Portalgreifer 51 verschwenkbar aufgenommen ist, wie durch den Pfeil 84 angedeutet ist. Der U-förmige Rahmen 65 der Umsetzeinrichtung 64 ist, wie bereits erläutert, in Vertikalrichtung an den Vertikalträgern 71, 72 verfahrbar aufgenommen, wie durch den Doppelpfeil 86 in Fig. 5 verdeutlicht ist. Der Greifer 70 zum Erfassen der Teileträger 76 ist an dem U-förmigen Rahmen 65 in Horizontalrichtung verfahrbar, wie durch den Doppelpfeil 79 angedeutet ist.

Die Haube 46, die zum Berührungsschutz dient, kann zwischen dem ersten Stapelplatz 42, 43, 44 auf einer Horizontalführung 96 verfahren werden. Dabei kann die Umsetzeinrichtung 64 zum Bewegen der Haube 46 zwischen diesen drei Positionen genutzt werden. Sofern die zugeordnete Bearbeitungseinrichtung sehr kurze Taktzeiten aufweist, kann die Haube 46 jedoch zusätzlich mit einem eigenen Antrieb ausgestattet sein. Bei besonders kurzen Taktzeiten kann ferner die Oberseite der Haube 46 selbst zur Aufnahme eines Teileträgers ausgebildet sein, wie dies durch die Ziffer 76' angedeutet ist, wenn sich die Haube in der Position 46' über dem dritten Stapelplatz 44 befindet.

Dies ermöglicht eine Entkopplung des Umsetzvorgangs zwischen den Stapelplätzen 42 und 43 von der Zuführung bzw. Entnahme von Teilen vom obersten Teileträger am dritten Stapelplatz 44.

Darüber hinaus kann auf der Oberseite der Haube 46 eine Teleskopschublade 120 zur Aufnahme eines Teileträgers 76' vorgesehen sein, die ein Verfahren des Teileträgers 76' in Pfeilrichtung 122 bei geöffneter Bedienungstür 47 nach außen erlaubt (Fig. 9).

Die Schottwand 45, die in den Fig. 6 und 7 vergrößert dargestellt ist, ist vorzugsweise besonders stabil ausgeführt und ist, wie in der Aufsicht gemäß Fig. 7 erkennbar ist, an ihren beiden äußeren Enden mit Zentrierflächen 87, 88 versehen, so daß Teileträgerstapel, die auf einem Bodenroller 77 in den ersten Stapelplatz 42 eingefahren werden, über die beiden schrägen Zentrierflächen 87, 88 zentriert werden und an der geraden Fläche der Schottwand 45 ausgerichtet werden.

Zusätzlich können im vorderen Bereich, etwa im Bereich der Tür, an beiden Seiten Führungselemente 89, 90 vorgesehen sein, die beweglich angeordnet sein können, wie durch die Pfeile 91, 92 angedeutet ist, um eine Vorzentrierung eines Teileträgerstapels vor dem Einfahren in den ersten Stapelplatz 42 zu ermöglichen. Dies ist z.B. bei Teileträgern mit Teilen, die aus einer Härteanlage kommen, sinnvoll.

Zusätzlich kann gemäß Fig. 6 zur Aufnahme eines Teileträgerstapels beim Einschieben auf den ersten Stapelplatz 42 an beiden Seiten eine Führungsschiene angeordnet sein, wie durch die Ziffer 108 angedeutet ist, die verstellbar mittels eines Stellelementes 102 auf der Bodenfläche ausgerichtet werden kann. An diesen beiden Führungsschienen 108 befinden sich dann Rollen 101 zur Aufnahme des Bodenrollers unabhängig vom darunter befindlichen Boden. Ein Teileträgerstapel kann somit auf die beiden vorderen etwas abgesenkten Rollen der Führungsschiene 108 aufgeschoben und mit Schwung auf die beiden Führungsschienen 108 überführt werden, wodurch der Teileträgerstapel zusammen mit den Zentrierflächen 87, 88 an der Schottwand 45 unabhängig vom Boden sauber ausgerichtet auf dem ersten Stapelplatz 42 aufgenommen wird.

Dadurch wird eine hohe Positioniergenauigkeit bei den späteren Handhabungsvorgängen erreicht.

In der vergrößerten Darstellung von Fig. 8 ist erkennbar, daß die Haube 46 mit einer oberen Deckfläche 93 und zwei Seitenflächen 94, 95 ausgebildet ist, die an ihren unteren Enden mittels einer Antriebseinrichtung 97 auf den Horizontalführungen 96 verfahrbar aufgenommen ist.

Um eine Verriegelung der Haube 46 über dem ersten Stapelplatz 42, dem zweiten Stapelplatz 43 oder dem dritten Stapelplatz 44 zu ermöglichen, kann, wie in Fig. 8 dargestellt, seitlich neben der Haube 46 eine Welle 98 vorgesehen sein, die um ihre Längsachse verschwenkbar ist und drei Verriegelungszapfen 99 an geeigneter Stelle aufweist, die bei Erreichen der gewünschten Verriegelungsposition mit einer Zapfenaufnahme 100 an der Haube 46 verriegelt werden können.

Zusätzlich kann die gesamte Automationszelle tropfdicht ausgeführt werden, so daß eine Verschleppung von Kühlschmierstoff vermieden wird. Hierzu ist der gesamte Bereich des Arbeitsraums 41 mit einer Gerätebebodenwanne 109 ausgekleidet. Gleichzeitig kann auch im Bereich des ersten Stapelplatzes 42 ein Austritt von Kühlschmiermittel dadurch verhindert werden, daß, wie in Fig. 8 dargestellt, die Gerätebodenwanne 109 beidseitig bis unterhalb der Führung 96 für die Haube 46 ausgebildet ist, wobei davon jeweils eine Abtropffläche 103 hervorsteht, die bis über den Rand 104 des Bodenrollers 77 reicht, so daß ein zum Bodenroller 77 bestehender Zwischenraum überdeckt wird.

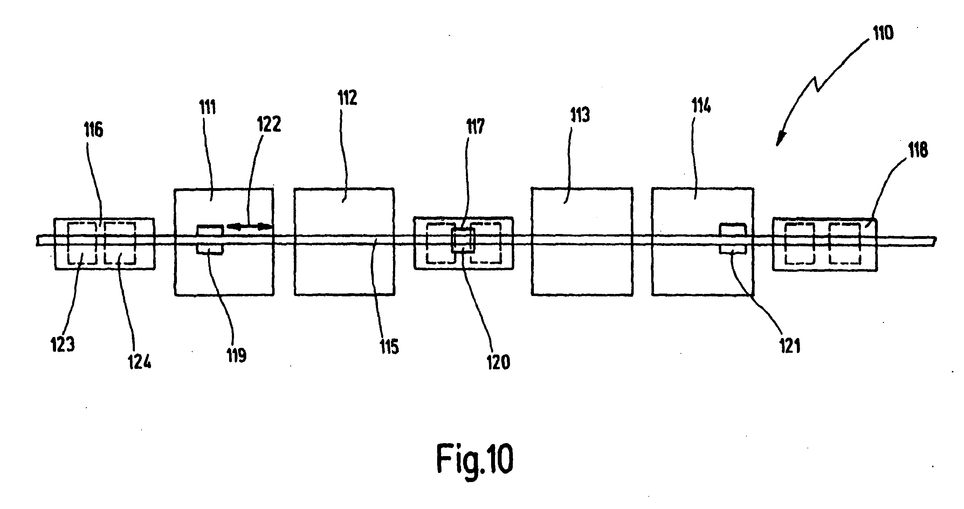

Eine abgewandelte Ausführung eines verketteten Fertigungssystems ist in Fig. 10 dargestellt und insgesamt mit der Ziffer 110 bezeichnet.

Es handelt sich hierbei um eine gegenüber der Ausführung gemäß Fig. 1 vereinfachte Ausführung, die kostengünstiger herstellbar ist.

Das Fertigungssystem 110 gemäß Fig. 10 weist einen ersten Puffer 116 auf, zwei nachgeordnete Bearbeitungseinrichtungen 111, 112, einen weiteren Puffer 117, zwei weitere Bearbeitungseinrichtungen 113, 114 und einen weiteren Puffer 118.

Es versteht sich, daß sich weitere Bearbeitungseinrichtungen und Puffer anschließen können.

Ein einziges Portal 115 dient zum Transport der Teile bzw. Teileträger zwischen den Puffern 116 bis 118 und den Bearbeitungseinrichtungen 111 bis 114.

Hierzu sind auf dem Portal 115 eine geeignete Anzahl von Portalgreifern 119, 120, 121 vorgesehen, die entlang des Portals verfahrbar sind und einen in Vertikalrichtung verfahrbaren Arm besitzen, an dessen Ende ein Greifer vorgesehen ist, der sowohl zum Greifen von Werkstücken als auch zum Greifen von Teileträgern geeignet ist. In diesem Fall dienen die Portalgreifer 119, 120, 121 sowohl zum Ein- bzw. Ausschleusen von Teilen in die Bearbeitungseinrichtungen 111 bis 114 als auch zum Umsetzen von Teileträgern zwischen jeweils zwei benachbarten Stapelplätzen 123, 124 innerhalb der jeweiligen Puffer 116 - 118.

## Patentansprüche

1. Verkettetes Fertigungssystem mit
- einer Mehrzahl von Bearbeitungseinrichtungen (12, 13, 14, 15, 16, 17; 11, 112) zur Durchführung von Bearbeitungsoperationen an Teilen (82, 83),
- mindestens einem Puffer (23, 24, 25, 26; 116, 117, 118) zur Entkopplung der Bearbeitungsvorgänge in den Bearbeitungseinrichtungen (12-17; 111-114),
- mindestens einem Portal (18, 19, 20, 21, 22, 115), über das die Bearbeitungseinrichtungen (12-17) und der mindestens eine Puffer (23-26; 116-118) miteinander verkoppelt sind,
- mit mindestens einem Portalgreifer (51, 53; 119, 120, 121), der auf dem mindesten einen Portal (18-22; 115) verfahrbar ist, um zu bearbeitende Teile (82, 83) zwischen den Bearbeitungseinrichtungen (12-17; 111-114) und dem mindestens einen Puffer (23-26; 116-118) zu transportieren und diese ein- und auszuschleusen,
- wobei mindestens drei Puffer (23-26; 116-118) vorgesehen sind,
- wobei die Puffer (23-26; 116-118) zur Aufnahme von Teileträgern (76) ausgebildet sind und jeweils mindestens zwei Stapelplätze (34, 35, 36; 42, 43, 44; 123, 124) aufweisen und
- eine Umsetzeinrichtung (64; 119, 120, 121) zum Umsetzen von Teileträgern (76) zwischen den Stapelplätzen (34-36; 42-44; 123, 124) innerhalb der Puffer (23-26; 116-118) vorgesehen ist,
**dadurch gekennzeichnet,**
**dass** jeweils zwei benachbarte Puffer (23-26; 116-118) der mindestens drei Puffer (23-26; 116-118) unmittelbar über ein Portal (18-22; 115) miteinander verbunden sind, welches die zwei benachbarten Puffer (23-26; 116-118) auch mit mindestens einer, zwischen den benachbarten Puffern (23-26; 116-118) angeordneten Bearbeitungseinrichtung (12-17; 111-114) verbindet.

2. Fertigungssystem nach Anspruch 1, **dadurch gekennzeichnet, daß** zumindest eine der Umsetzeinrichtungen durch einen Portalgreifer (119,120,121) gebildet ist, der zum Greifen von Teilen als auch zur Umsetzung von Teileträgern ausgebildet sind, und daß die Stapelplätze (123, 124) der Puffer (116, 117, 118) in Verfahrrichtung (122) der Portalgreifer (119-121) entlang des Portals (115) hintereinander angeordnet sind.

3. Fertigungssystem nach Anspruch 2 oder 3, **dadurch gekennzeichnet, daß** zumindest einer der Puffer (23-26) als Automationszelle (32; 40) ausgebildet ist, die eine eigene Umsetzeinrichtung (64) zum Umsetzen von Telleträgern (76) innerhalb der Automationszelle (32; 40) aufweist.

4. Fertigungssystem nach Anspruch 3, **dadurch gekennzeichnet, daß** in zumindest einer Automationszelle (32; 40) die Stapelplätze (34, 35, 36; 42, 43, 44) quer zur Erstreckungsrichtung des mindestens einen Portals (18-22) hintereinander angeordnet sind.

5. Fertigungssystem nach einem der vorhergehenden Ansprüche, **dadurch gekennzeichnet, daß** zumindest einer der Puffer (23-26) als Automationszelle (32; 40) ausgebildet ist, die eine Umsetzeinrichtung (64) zum Umsetzen von Teileträgern (76) zwischen verschiedenen Stapelplätzen (34-36; 42-44) innerhalb eines Arbeitsraums (33; 41) der Automationszelle (32; 40) und eine Einrichtung zum Einschleusen (38; 45, 46,47) und Ausschleusen von Teileträgerstapeln (105) in den Arbeitsraum (33; 41) und aus dem Arbeitsraum (33; 41) aufweist.

6. Fertigungssystem nach einem der vorhergehenden Ansprüche, **dadurch gekennzeichnet, daß** zumindest einer der Puffer als Automationszelle (32; 40) mit drei Stapelplätzen (34-36; 42-44) ausgebildet ist.

7. Fertigungssystem nach einem vorhergehenden Ansprüche, **dadurch gekennzeichnet, daß** die Puffer (23-26; 116-118) einen nach außen berührungssicher abgeschlossenen Arbeitsraum aufweisen.

8. Fertigungssystem nach einem dervorhergehenden Ansprüche, **dadurch gekennzeichnet, daß** zumindest einer der Puffer (23-26) über mindestens zwei Portale (18-22) mit Bearbeitungseinrichtungen (12-17) verkoppelt ist.

9. Fertigungssystem nach einem der Ansprüche 5 bis 8, **dadurch gekennzeichnet, daß** zumindest eine Automationszelle (40) innerhalb des nach außen abgeschlossenen Arbeitsraums (41) einen ersten (42), einen zweiten (43) und einen dritten (44) hintereinander In einer Horizontalrichtung (48) angeordneten Stapelplatz aufweist, von denen der erste über eine Tür (47) von außen in der Horizontalrichtung (48) beschickbar ist und gegenüber den übrigen Stapelplätzen (43, 44) berührungssicher abtrennbar ist, daß eine Umsetzeinrichtung (64) vorgesehen ist, die sich in Richtung der hintereinander angeordneten Stapelplätze (42, 43, 44) erstreckt und ein Umsetzen von Teilen zwischen den drei Stapelplätzen (42, 43, 44) innerhalb des Arbeitsraums (41) erlaubt, und daß die Umsetzeinrichtung (64) eine erste in Horizontalrichtung verfahrbare Linearachse und eine zweite in Vertikalrichtung verfahrbare Linearachse aufweist.

10. Fertigungssystem nach Anspruch 9, **dadurch gekennzeichnet, daß** der erste Stapelplatz (42) gegenüber dem zweiten (43), dazu benachbarten Stapelplatz durch eine sich im wesentlichen vertikal erstreckende Schottwand (45) und gegenüber dem übrigen Teil des Arbeitsraums (41) durch eine Haube (46) berührungssicher abgetrennt ist, die zumindest zwischen dem ersten (42) und dem zweiten (43) Stapelplatz verfahrbar ist.

11. Fertigungssystem nach Anspruch 10, **dadurch gekennzeichnet, daß** die Schottwand (45) feststehend ausgebildet ist und mit Zentrierflächen (87, 88) zur Führung und Zentrierung von zum ersten Stapelplatz (42) zugeführter Teileträger (76) versehen ist.

12. Fertigungssystem nach Anspruch 10 oder 11, **dadurch gekennzeichnet, daß** der Schottwand (45) Führungselemente (89, 90) zugeordnet sind, die zur Zentrierung von zugeführten Teileträgern (76) seitlich auf diese zustellbar angeordnet sind.

13. Fertigungssystem nach einem der Ansprüche 10 - 12, **dadurch gekennzeichnet, daß** die Haube (46) U-förmig mit einer Deckfläche (93) und mit zwei Seitenflächen (94, 95) ausgebildet ist.

14. Fertigungssystem nach einem der Ansprüche 10 - 13, **dadurch gekennzeichnet, daß** die Haube (46) zwischen dem ersten (42), dem zweiten (43) und dem dritten (44) Stapelplatz verfahrbar angeordnet ist.

15. Fertigungssystem nach Anspruch 14, **dadurch gekennzeichnet, daß** die Haube (46) mittels der Umsetzeinrichtung (64) verfahrbar ist.

16. Fertigungssystem nach Anspruch 15, **dadurch gekennzeichnet, daß** die Haube (46) mit einer Antriebseinrichtung (97) gekoppelt ist, die eine Positionierung über dem ersten (42), dem zweiten (43) oder dem dritten Stapelplatz (44) erlaubt.

17. Fertigungssystem nach einem der Ansprüche 10 - 16, **dadurch gekennzeichnet, daß** die Haube (46) zur Aufnahme mindestens eines Teileträgers (76') ausgebildet ist.

18. Fertigungssystem nach Anspruch 17, **dadurch gekennzeichnet, daß** auf der Oberseite der Haube eine Schublade (120) zur Aufnahme eines Teileträgers (76') vorgesehen Ist, die ein Verfahren des Teileträgers (76') bei geöffneter Bedienungstür (47) nach außen erlaubt.

19. Fertigungssystem nach einem der Ansprüche 10 -18, **dadurch gekennzeichnet, daß** zur Verriegelung der Haube (46) eine um ihre Längsachse schwenkbare Welle (98) vorgesehen ist, die mit Verriegelungszapfen (99) versehen ist, die mit einer Zapfenaufnahme (100) an der Haube (46) in vorgegebenen Positionen verriegelbar sind.

20. Fertigungssystem nach einem der Ansprüche 10 - 19, **dadurch gekennzeichnet, daß** im Bereich des ersten Stapelplatzes (42) zur Aufnahme von Werkstückträgern (76) von einem Bodenroller in eine definierte Endlage vorzugsweise mit Rollen (101) versehene Führungsschienen (108) vorgesehen sind, die vorzugsweise mit Stellelementen (102) versehen sind.

## Claims

1. An interlinked production system, comprising
- a plurality of processing stations (12, 13, 14, 15, 16, 17; 11, 112) for performing processing operations on parts (82, 83),
- at least one buffer (23, 24, 25, 26; 116, 117, 118) for decoupling the processing operations in the processing stations (12-17; 111-114),
- at least one portal (18, 19, 20, 21, 22; 115) linking the processing stations (12-17) and the at least one buffer (23-26; 116-118),
- at least one portal gripper (51, 53; 119, 120, 121) being drivable along said at least one portal (18-22; 115) to transport parts (82, 83) to be processed between the processing stations (12-17; 111-114) and the at least one buffer (23-26; 116-118), and to supply the parts into and discharge them out of the processing stations and the at least one buffer,
- at least three buffers (23-26; 116-118) being provided,
- the buffers (23-26; 116-118) being adapted for receiving part carriers (76) and each comprising at least two stack positions (34, 35, 36; 42, 43, 44; 123, 124), and
- a transfer device (64; 119, 120, 121) being provided within the buffers (23-26; 116-118), for transferring part carriers (76) between the stack positions (34-36; 42-44; 123, 124),
**characterized in that**
immediately adjacent buffers (23-26; 116-118) of the at least three buffers (23-26; 116-118) are connected to each other in pairs via a portal (18-22; 115) which also connects the two adjacent buffers (23-26; 116-118) to at least one processing station (12-17; 111-114) arranged between the adjacent buffers (23-26; 116-118).

2. The production system of claim 1, **characterized in that** at least one of the transfer devices is formed by a portal gripper (119, 120, 121) configured to grip parts and also for transferring part carriers, and that the stack positions (123, 124) of the buffers (116, 117, 118) are arranged sequentially along the transfer direction (122) of the portal grippers (119-121) along the portal (115).

3. The production system of claim 1 or 2, **characterized in that** at least one of the buffers (23-26) is configured as an automated cell (32; 40), having an independent transfer device (64) for transferring part carriers (76) within the automated cell (32; 40).

4. The production system of claim 3, **characterized in that** the stack positions (34, 35, 36; 42, 43, 44) in at least one automated cell (32; 40) are arranged sequentially after one another and transversely to a direction in which said at least one portal (18-22) extends.

5. The production system of any of the preceding claims, **characterized in that** at least one of said buffers (23-26) is configured as an automated cell (32; 40), said automated cell comprising a transfer device (64) for transferring part carriers (76) between different stack positions (34-36; 42-44) within a working space (33; 41) of the automated cell (32; 40), and a device for supplying (38; 45, 46, 47) stacks (105) of part carriers into the working space (33; 41) and for discharging stacks (105) of part carriers out of the working space (33; 41).

6. The production system of any of the preceding claims, **characterized in that** at least one of the buffers is configured as an automated cell (32; 40) comprising three stack positions (34-36; 42-44).

7. The production system of any of the preceding claims, **characterized in that** the buffers (23-26; 116-118) comprise a working space secured against contact from the outside.

8. The production system of any of the preceding claims, **characterized in that** at least one of the buffers (23-26) is linked via at least two portals (18-23) with processing stations (12-17).

9. The production system of any of claims 5 to 8, **characterized in that** at least one automated cell (40) comprises within the closed working space (41) a first (42), a second (43), and a third (44) stack position, which stack positions are arranged sequentially in a horizontal direction (48), wherein the first stack position can be supplied from the outside in the horizontal direction (48) via a door (47), and wherein the first stack position can be separated from the other stack positions (43, 44) so as to be secured against contact, that a transfer device (64) is provided which extends in the direction of the sequentially arranged stack positions (42, 43, 44) and allows transferring of parts between the three stack positions (42, 43, 44) within the working space (41), and that the transfer device (64) comprises a first linear axis being horizontally drivable, and a second linear axis being vertically drivable.

10. The production system of claim 9, **characterized in that** a bulkhead (45) extends substantially vertically, said bulkhead separating the first stack position (42) from the second (43) stack position arranged adjacent thereto, and wherein the first stack position (42) is separated, secured against contact, from the other portion of the working space (41) by a hood, the hood being drivable at least between the first (42) and the second (43) stack position.

11. The production system of claim 10, **characterized in that** the bulkhead (45) is configured to be stationary and comprises centering surfaces (87, 88) for guiding and centering part carriers (76) supplied to the first stack position (42).

12. The production system of claim 10 or 11, **characterized in that** guide elements (89, 90) are associated to the bulkhead (45), said guide elements (89, 90) being arranged for centering supplied part carriers (76), to which purpose the guide elements (89, 90) can be moved onto the part carriers (76) from the side thereof.

13. The production system of any of claims 10 to 12, **characterized in that** the hood (46) is formed to be U-shaped and comprises a top surface (93)and two side surfaces (94, 95).

14. The production system of any of claims 10 to 13, **characterized in that** the hood (46) is arranged to be drivable between the first (42), the second (43) and the third (44) stack position.

15. The production system of claim 14, **characterized in that** the hood (46) is arranged to be drivable by means of the transfer device (64).

16. The production system of claim 15, **characterized in that** the hood (46) is coupled with drive means (97) which allow positioning said hood (46) above the first (42), the second (43) or the third stack position (44).

17. The production system of any of claims 10 to 16, **characterized in that** the hood (46) is configured to receive at least one part carrier (76').

18. The production system of claim 17, **characterized in that** a drawer (120) is provided on the top surface of the hood and is configured for receiving a part carrier (76'), wherein the drawer allows to transfer the part carrier (76') to the outside when the surface door (47) is opened.

19. The production system of any of claims 9 to 18, **characterized in that** a shaft (98) is provided for locking the hood (46), the shaft (98) being pivotable about its longitudinal axis, wherein the shaft (98) is provided with a locking pin (99), and wherein the locking pin (99) can be locked in preset positions with a pin recess (100) on the hood (46).

20. The production system of any of claims 9 to 19, **characterized in that** guide tracks (108) are provided in the region of the first stack position (42) for receiving part carriers (76) from a roller cart into a defined end position, wherein the guide tracks (108) are preferably provided with rollers (101), and wherein the guide tracks (108) are preferably provided with adjustment elements (102).

## Revendications

1. Système de fabrication à enchaînement direct, comprenant
- une pluralité de dispositifs d'usinage (12, 13, 14, 15, 16, 17 ; 11, 112) pour l'exécution d'opérations d'usinage sur des pièces (82, 83),
- au moins une zone tampon (23, 24, 25, 26 ; 116, 117, 118) pour le découplage des opérations d'usinage dans lesdits dispositifs d'usinage (12-17 ; 111-114),
- au moins un portique (18, 19, 20, 21, 22, 115) solidarisant les dispositifs d'usinage (12-17) et la zone tampon (23-26 ; 116-118) prévue au minimum,
- au moins un organe de préhension (51, 53 ; 119, 120, 121) mobile, sur le portique (18-22 ; 115) prévu au minimum, pour transporter des pièces à usiner (82, 83) entre les dispositifs d'usinage (12-17 ; 111-114) et la zone tampon (23-26 ; 116-118) prévue au minimum, et pour faire entrer et sortir lesdites pièces,
- sachant qu'au moins trois zones tampons (23-26 ; 116-118) sont prévues,
- que lesdites zones tampons (23-26 ; 116-118) sont conçues pour recevoir des porte-pièces (76), et sont respectivement munies d'au moins deux postes d'empilement (34, 35, 36 ; 42, 43, 44 ; 123, 124),
- et qu'un dispositif de transfert (64 ; 119, 120, 121) est prévu pour transférer des porte-pièces (76) entre les postes d'empilement (34-36 ; 42-44 ; 123, 124), à l'intérieur des zones tampons (23-26 ; 116-118),
**caractérisé par le fait**
**que** deux zones tampons (23-26 ; 116-118) directement voisines, parmi les trois zones tampons (23-26 ; 116-118), sont reliées l'une à l'autre par l'intermédiaire d'un portique (18-22 ; 115) qui relie également les deux zones tampons voisines (23-26 ; 116-118) à au moins un dispositif d'usinage (12-17 ; 111-114) situé entre lesdites zones tampons voisines (23-26 ; 116-118).

2. Système de fabrication selon la revendication 1, **caractérisé par le fait qu'**au moins l'un des dispositifs de transfert est constitué d'un organe de préhension (119, 120, 121) monté sur le portique et réalisé, à la fois, pour saisir des pièces et pour transférer des porte-pièces ; et **par le fait que** les postes d'empilement (123, 124) des zones tampons (116, 117, 118) sont agencés en succession le long du portique (115), dans la direction de déplacement (122) des organes de préhension (119-121) montés sur ledit portique.

3. Système de fabrication selon la revendication 1 ou 2, **caractérisé par le fait qu'**au moins l'une des zones tampons (23-26) est réalisée sous la forme d'une cellule automatisée (32 ; 40), munie d'un propre dispositif de transfert (64) pour transférer des porte-pièces (76) à l'intérieur de ladite cellule automatisée (32 ; 40).

4. Système de fabrication selon la revendication 3, **caractérisé par le fait que** les postes d'empilement (34, 35, 36 ; 42, 43, 44) sont agencés en succession, dans au moins une cellule automatisée (32 ; 40), transversalement par rapport à la direction de l'étendue du portique (18-22) prévu au minimum.

5. Système de fabrication selon l'une des revendications précédentes, **caractérisé par le fait qu'**au moins l'une des zones tampons (23-26) est réalisée sous la forme d'une cellule automatisée (32 ; 40) qui comprend un dispositif de transfert (64) pour transférer des porte-pièces (76) entre différents postes d'empilement (34-36 ; 42-44), à l'intérieur d'un espace de travail (33 ; 41) de ladite cellule automatisée (32-40) ; et un dispositif conçu pour faire pénétrer (38 ; 45, 46, 47) des empilements (105) de porte-pièces dans l'espace de travail (33 ; 41), et pour faire sortir lesdits empilements dudit espace de travail (33 ; 41).

6. Système de fabrication selon l'une des revendications précédentes, **caractérisé par le fait qu'**au moins l'une des zones tampons est réalisée sous la forme d'une cellule automatisée (32 ; 40) comptant trois postes d'empilement (34-36 ; 42-44).

7. Système de fabrication selon l'une des revendications précédentes, **caractérisé par le fait que** les zones tampons (23-26 ; 116-118) présentent un espace de travail fermé vers l'extérieur, à l'abri de contacts.

8. Système de fabrication selon l'une des revendications précédentes, **caractérisé par le fait qu'**au moins l'une des zones tampons (23-26) est reliée à des dispositifs d'usinage (12-17) par l'intermédiaire d'au moins deux portiques (18-22).

9. Système de fabrication selon l'une des revendications 5 à 8, **caractérisé par le fait qu'**au moins une cellule automatisée (40) comprend, à l'intérieur de l'espace de travail (41) fermé vers l'extérieur, des premier (42), deuxième (43) et troisième (44) postes d'empilement agencés en succession dans une direction horizontale (48), parmi lesquels le premier poste peut être alimenté de l'extérieur dans la direction horizontale (48), par l'intermédiaire d'une porte (47), et peut être séparé d'avec les autres postes d'empilement (43, 44) à l'abri de contacts ; **par le fait qu'**il est prévu un dispositif de transfert (64) qui s'étend dans la direction des postes d'empilement (42, 43, 44) agencés en succession, et autorise un transfert de pièces entre les trois postes d'empilement (42, 43, 44), à l'intérieur de l'espace de travail (41) ; et **par le fait que** ledit dispositif de transfert (64) comporte un premier axe linéaire mobile dans la direction horizontale, et un second axe linéaire mobile dans la direction verticale.

10. Système de fabrication selon la revendication 9, **caractérisé par le fait que** le premier poste d'empilement (42) est séparé à l'abri de contacts, d'avec le deuxième poste (43) qui lui est attenant, par une cloison séparatrice (45) s'étendant pour l'essentiel dans le sens vertical et, d'avec la partie restante de l'espace de travail (41), par un capot (46) au moins doué de mobilité entre lesdits premier (42) et deuxième (43) postes d'empilement.

11. Système de fabrication selon la revendication 10, **caractérisé par le fait que** la cloison séparatrice (45) est de réalisation stationnaire, et est pourvue de surfaces de centrage (87, 88) destinées au guidage et au centrage de porte-pièces (76) délivrés au premier poste d'empilement (42).

12. Système de fabrication selon la revendication 10 ou 11, **caractérisé par le fait que** des éléments de guidage (89, 90), affectés à la cloison séparatrice (45), sont agencés avec faculté de présentation latérale à des porte-pièces délivrés (76), en vue du centrage de ces derniers.

13. Système de fabrication selon l'une des revendications 10-12, **caractérisé par le fait que** le capot (46) est réalisé avec configuration en U, comprenant une face de recouvrement (93) et deux faces latérales (94, 95).

14. Système de fabrication selon l'une des revendications 10-13, **caractérisé par le fait que** le capot (46) est agencé avec mobilité entre les premier (42), deuxième (43) et troisième (44) postes d'empilement.

15. Système de fabrication selon la revendication 14, **caractérisé par le fait que** le capot (46) peut être déplacé au moyen du dispositif de transfert (64).

16. Système de fabrication selon la revendication 15, **caractérisé par le fait que** le capot (46) est relié à un dispositif d'entraînement (97) autorisant un positionnement au-dessus du premier (42), du deuxième (43) ou du troisième (44) poste d'empilement.

17. Système de fabrication selon l'une des revendications 10-16, **caractérisé par le fait que** le capot (46) est conçu pour recevoir au moins un porte-pièces (76').

18. Système de fabrication selon la revendication 17, **caractérisé par** la présence, sur la face supérieure du capot, d'un tiroir (120) destiné à recevoir un porte-pièces (76') et autorisant un déplacement dudit porte-pièces (76'), vers l'extérieur, lorsque la porte de service (47) est ouverte.

19. Système de fabrication selon l'une des revendications 10-18, **caractérisé par le fait qu'**un arbre (98) pouvant pivoter autour de son axe longitudinal, prévu pour verrouiller le capot (46), est doté de tenons de verrouillage (99) pouvant être verrouillés, en des emplacements préétablis, par coopération avec un logement (100) façonné sur ledit capot (46).

20. Système de fabrication selon l'une des revendications 10-19, **caractérisé par le fait que** des rails de guidage (108), munis de préférence de rouleaux (101) et préférentiellement dotés d'éléments de réglage (102), sont prévus dans la région du premier poste d'empilement (42) en vue de recevoir des porte-pièces (76) délivrés par un chariot à roulettes, jusqu'à une position extrême bien définie.
